# EUROPEAN PATENT SPECIFICATION

(11) **EP 2 336 535 B1**
(45) Date of publication and mention of the grant of the patent: **19.03.2014**
(21) Application number: 10191965.2
(22) Date of filing: 19.11.2010
(51) Int. Cl.: F02D 41/40, F02D 41/38

(54) **Correction amount control method for fuel injection amount correction and common rail fuel injection control apparatus**
Steuerverfahren für die Korrekturmenge bei der Kraftstoffeinspritzkorrektur und Kraftstoffeinspritz-Steuervorrichtung für herkömmliche Schienen
Procédé de contrôle de la quantité de correction pour correction de quantité d'injection et appareil de contrôle d'injection de carburant de rail commun

(30) Priority: 09.12.2009 JP 2009279038
(43) Date of publication of application: 22.06.2011
(73) Proprietor: Bosch Corporation, Tokyo 150-8360 (JP)
(72) Inventor: Hattori, Koji, Saitama 355-8603 (JP); Hashimoto, Kota, Saitama 355-8603 (JP)
(74) Representative: DREISS Patentanwälte PartG mbB

(56) References cited:
- EP-A2- 1 338 781
- WO-A1-99/47802
- WO-A1-2009/059931
- DE-A1-102006 000 530

## Description

### Technical Field

The present invention relates to a fuel injection control of an internal combustion engine, and in particular relates to achieving an improvement in the stability and reliability of injection in a multi fuel injection control, or the like.

### Background Art

In an internal combustion engine, how to carry out a fuel injection control, as it affects the operation and performance of the internal combustion engine significantly, is a significant issue, and various control methods have heretofore been proposed and put to practical use.

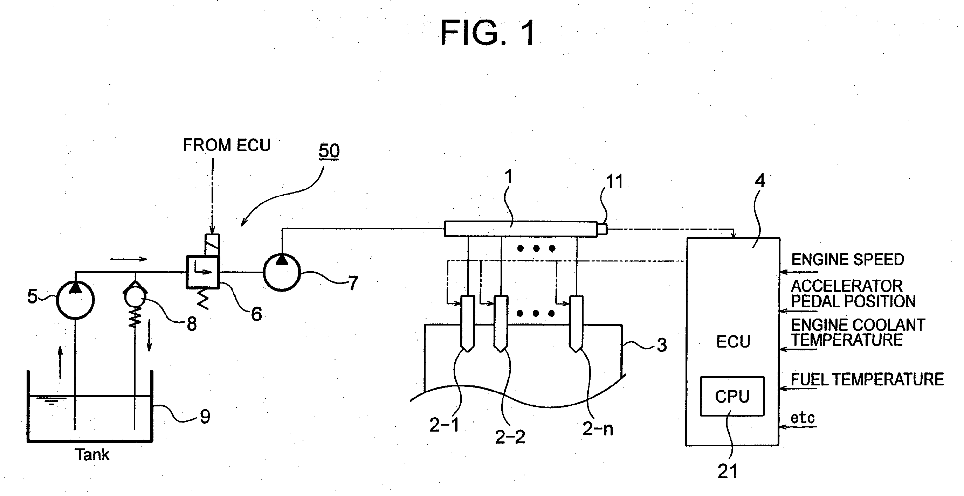

For example, various kinds of technology relating to a so-called multi injection control which carries out a plurality of fuel injections in one engine cycle have been proposed and put to practical use from the viewpoint of an improvement in fuel efficiency, an exhaust gas purification, and the like, in a diesel engine (for example, refer to JP-T-2004-504528 (pages 3 to 10, and Figs. 1 to 4).

Meanwhile, with such a multi injection control, it is known that when a pilot injection is carried out, a pressure pulsation occurs in injection pipes due to a reaction thereto, causing an injection amount fluctuation in a main injection. For this reason, in an internal combustion engine in which a multi injection control is carried out, it is common that a configuration is adopted wherein an injection amount correction such as to compensate for a main injection amount fluctuation caused by the pressure pulsation in the injection pipes is carried out in order to obtain an original main injection amount.

However, the heretofore described kind of injection amount correction in the multi injection control is not necessarily perfect.

That is, for example, in a kind of case in which the viscosity of fuel used increases quickly in a low temperature region in comparison with that at a room temperature, as the pressure pulsation at the entrance of the fuel injection pipes is suppressed, and is not so much as an estimated pressure fluctuation in the injection amount correction, there is a problem in that the correction amount becomes inappropriate, and the original correction effect cannot be hoped for.

Also, in a low temperature environment, the size of an injection amount fluctuation tends to be suppressed in comparison with in a normal operating temperature range, but on the other hand, as a correction amount in the injection amount correction is fixed with the normal operating temperature range as a standard, there is also a problem in that a sufficiently appropriate correction amount is not necessarily secured in the low temperature environment, but rather, an excessive injection amount correction is made, and a corrected injection amount increases unnecessarily.

### Disclosure of the Invention

### Problems to be Solved by the Invention

The invention, having been contrived bearing in mind the heretofore described actual situation, has an object of providing a correction amount control method for a fuel injection amount correction, and a common rail fuel injection control apparatus, whereby a correction amount in a fuel injection amount correction is secured at an appropriate size, even when an environmental temperature is in a low temperature region, with a simple configuration, thus enabling a realization of a high stability and reliability fuel injection amount.

### Means for Solving the Problems

In order to achieve the object of the invention, according to one aspect of the invention, a correction amount control method for a fuel injection amount correction is for, in a common rail fuel injection control apparatus configured capable of a multi injection, controlling a correction amount in the fuel injection amount correction executed in order to reduce a fuel injection amount pulsation occurring between a preceding fuel injection and a fuel injection succeeding a finishing of the preceding fuel injection in one engine cycle, wherein a temperature correction factor which suppresses a deterioration in the fuel injection amount correction when an environmental temperature is in a low temperature region is used in a correction amount calculation process in the fuel injection amount correction.

In order to achieve the object of the invention, according to another aspect of the invention, a common rail fuel injection control apparatus, as well as being configured capable of a multi injection into an internal combustion engine with injectors by means of a control by an electronic control unit in accordance with an operating condition of the internal combustion engine, is configured so that a fuel injection amount correction control which reduces a fuel injection amount pulsation occurring between a preceding fuel injection and a fuel injection succeeding a finishing of the preceding fuel injection in one engine cycle can be executed by the electronic control unit, wherein the electronic control unit is configured in such a way that a temperature correction factor which suppresses a deterioration in the fuel injection amount correction when an environmental temperature is in a low temperature region is used in a correction amount calculation in the fuel injection amount correction.

### Advantage of the Invention

According to the aspects of the invention, as a temperature factor which corrects an excessive correction amount in the low temperature region is added to an existing fuel injection amount correction control, an advantage is achieved wherein an appropriate fuel injection amount correction in the low temperature region is secured with a simple configuration without necessitating a change of hardware, and it is possible to obtain a high stability and reliability fuel injection.

### Brief Description of Drawings

FIG. 1 is a configuration diagram showing a configuration example of a common rail fuel injection control apparatus to which is applied a correction amount control method for a fuel injection amount correction according to an embodiment of the invention.

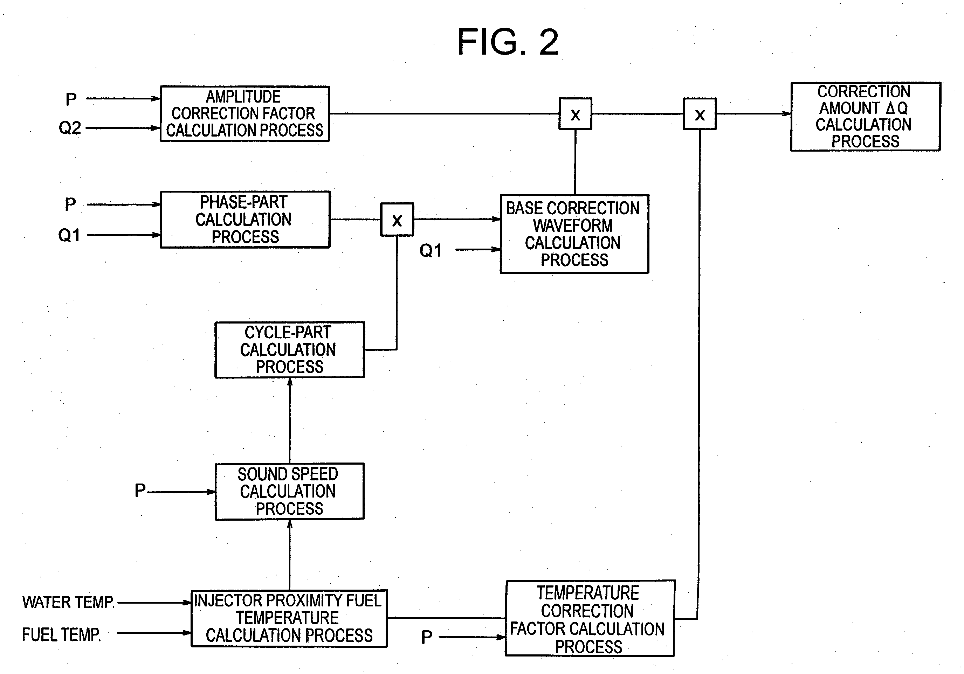

FIG. 2 is a functional block diagram showing a function required for an execution of a first configuration example of the correction amount control method for the fuel injection amount correction according to the embodiment of the invention in a microcomputer configuring an electronic control unit used in the common rail fuel injection control apparatus shown in Fig. 1.

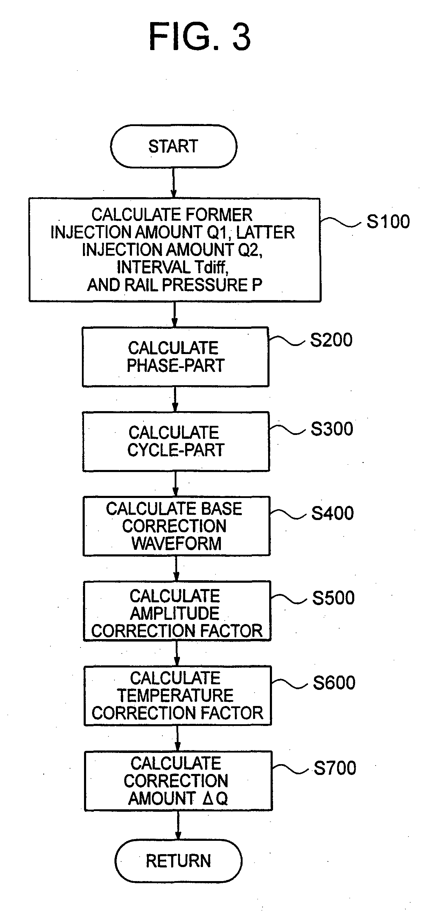

FIG. 3 is a sub-routine flowchart showing a processing procedure of a first configuration example of a correction control process, in the fuel injection amount correction according to the embodiment of the invention, executed by the electronic control unit used in the common rail fuel injection control apparatus shown in Fig. 1.

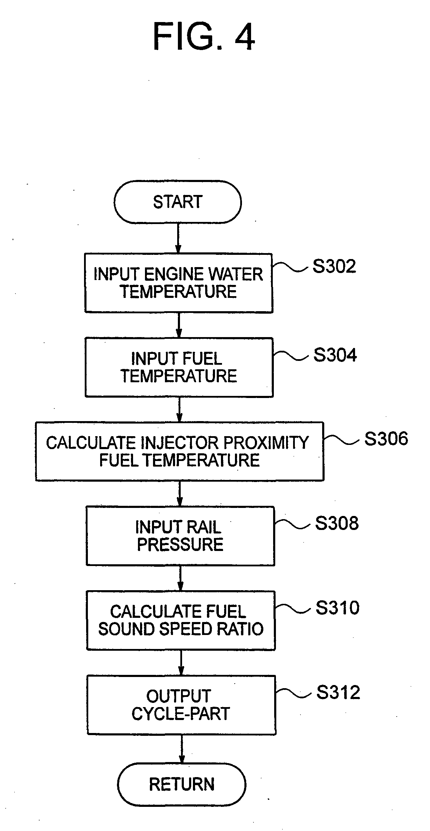

FIG. 4 is a sub-routine flowchart showing one example of a specific processing procedure of a cycle-part calculation process in the flowchart shown in Fig. 3.

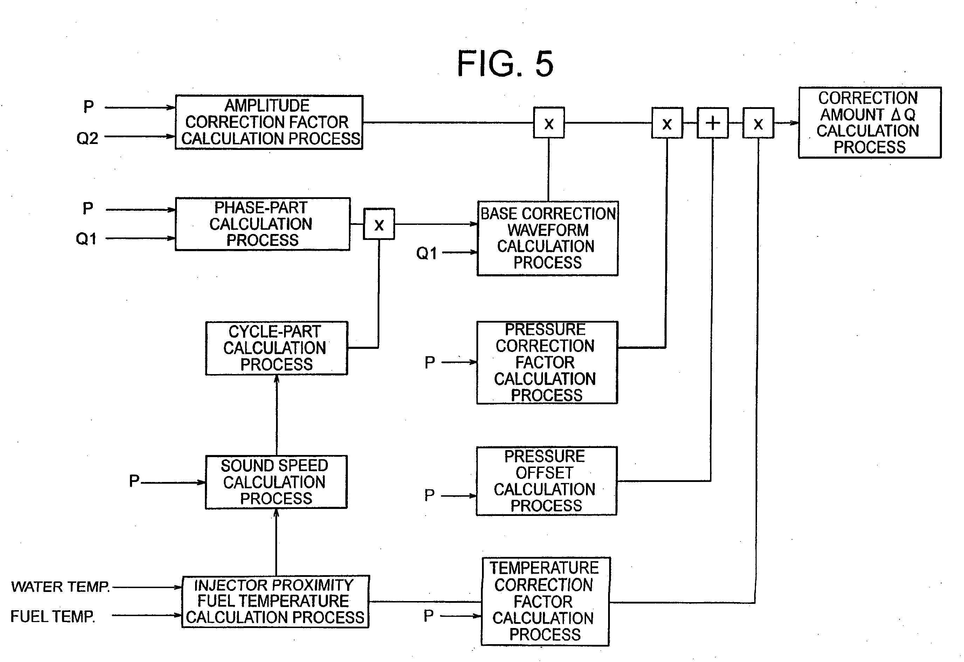

FIG. 5 is a functional block diagram showing a function required for an execution of a second configuration example of the correction amount control method for the fuel injection amount correction according to the embodiment of the invention in the microcomputer configuring the electronic control unit used in the common rail fuel injection control apparatus shown in Fig. 1.

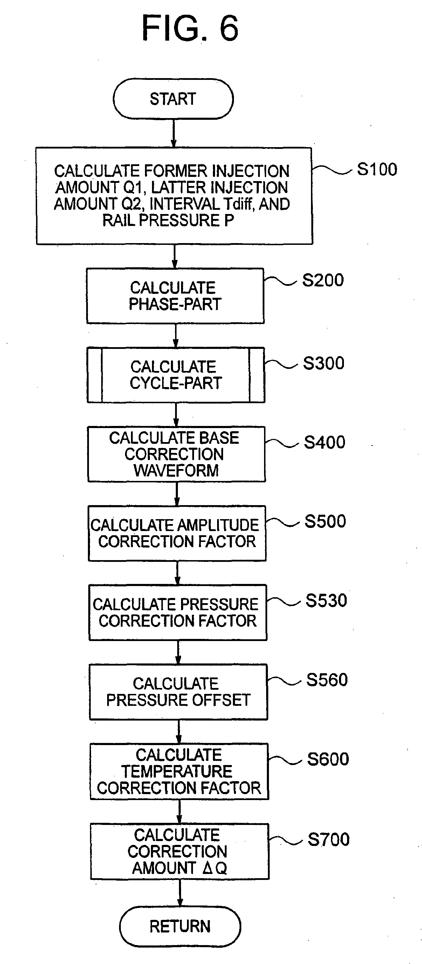

FIG. 6 is a sub-routine flowchart showing a processing procedure of a second configuration example of the correction control process, in the fuel injection amount correction according to the embodiment of the invention, executed by the electronic control unit used in the common rail fuel injection control apparatus shown in Fig. 1.

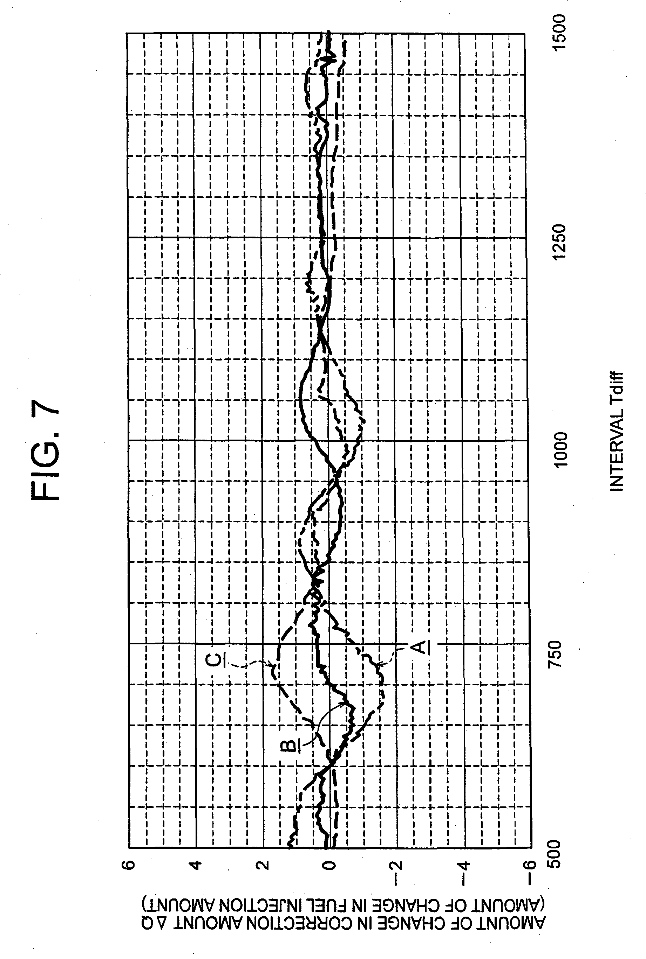

FIG. 7 is a characteristic line diagram showing a fuel injection amount change characteristic between a former injection and a latter injection when applying the correction amount control method for the fuel injection amount correction according to the embodiment of the invention, together with a correction amount change and uncorrected fuel injection amount change characteristic.

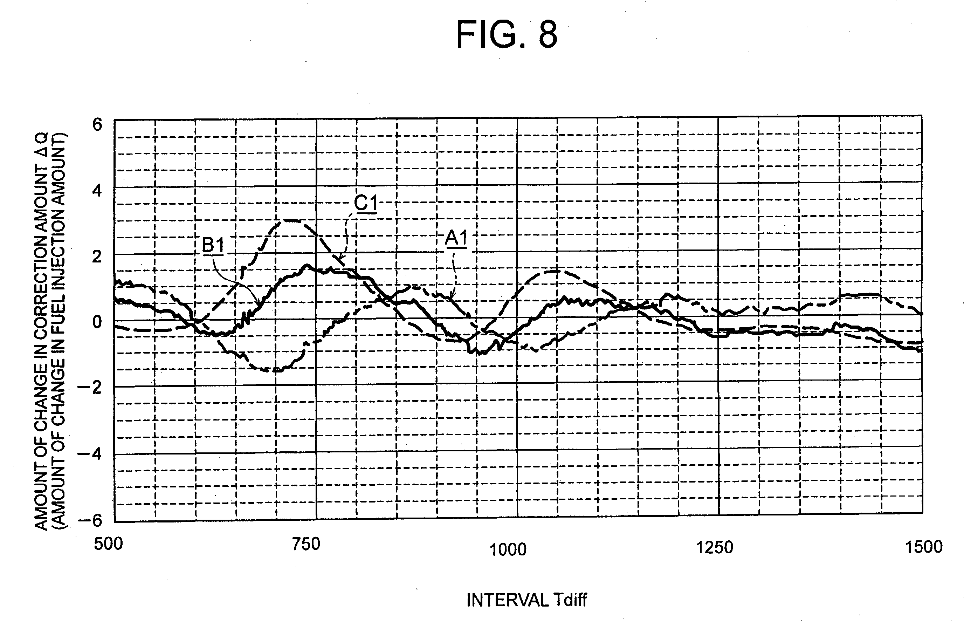

FIG. 8 is a characteristic line diagram showing a fuel injection amount change characteristic between a former injection and a latter injection in a heretofore known common rail fuel injection control apparatus, together with a correction amount change and uncorrected fuel injection amount change characteristic.

**Explanation of Codes**

| | |
|---|---|
| 1 | Common Rail |
| 2-1~2-n | Injector |
| 3 | Diesel Engine |
| 4 | Electronic Control Unit |
| 11 | Pressure Sensor |
| 21 | Microcomputer |
| 50 | High Pressure Pump System |

### Description of Specific Embodiment

Hereafter, a description will be given, while referring to Figs. 1 to 8, of an embodiment of the invention.

Members, dispositions, and the like, to be described hereafter, not limiting the invention, can be variously modified without departing from the scope of the invention.

Firstly, a description will be given, while referring to Fig. 1, of a configuration example of an injection control apparatus for an internal combustion engine to which is applied a correction amount control method for a fuel injection amount correction according to the embodiment of the invention.

As the injection control apparatus for the internal combustion engine shown in Fig. 1, specifically, in particular, a common rail fuel injection control apparatus is configured.

The common rail fuel injection control apparatus is configured of a high pressure pump system 50, which carries out a pumping of high pressure fuel, a common rail 1, which stores the high pressure fuel pumped by the high pressure pump system 50, a plurality of injectors 2-1 to 2-n, which supply the high pressure fuel supplied from the common rail 1 by injecting it into the cylinders of a diesel engine (hereafter called an "engine") 3, and an electronic control unit (in Fig. 1, described as an "ECU") 4, which executes a fuel injection control process, and the like, as main components.

Such a configuration itself is identical to the basic configuration of a heretofore well-known fuel injection control apparatus of this type.

The high pressure pump system 50 has a heretofore and commonly known configuration wherein it is configured of a supply pump 5, a metering valve 6, and a high pressure pump 7 as main components.

With such a configuration, fuel in a fuel tank 9 is pumped up by the supply pump 5, and supplied to the high pressure pump 7 via the metering valve 6. An electromagnetic proportional control valve is used as the metering valve 6 and, by the current carrying capacity thereof being controlled by the electronic control unit 4, the flow rate of fuel supplied to the high pressure pump 7, in other words, the discharge rate of the high pressure pump 7 is adjusted.

A return valve 8 being provided between the output side of the supply pump 5 and the fuel tank 9, it is possible to return surplus fuel on the output side of the supply pump 5 to the fuel tank 9.

Also, the supply pump 5 may be either provided on the upstream side of the high pressure pump system 50 separately from the high pressure pump system 50, or provided inside the fuel tank 9.

The injectors 2-1 to 2-n being provided one for each of the cylinders of the engine 3, each of them receives a supply of high pressure fuel from the common rail 1, and carries out a fuel injection by means of an injection control by the electronic control unit 4.

The injectors 2-1 to 2-n according to the embodiment of the invention are of, for example, a so-called electromagnetic valve type which has heretofore been used. Such injectors 2-1 to 2-n are such that the drive control thereof is carried out by the electronic control unit 4, thus enabling the injection of high pressure fuel into the cylinders of the engine 3.

The electronic control unit 4, for example, as well as having a storage element (not shown), such as an RAM or an ROM, is configured having a circuit (not shown) for energizing and driving the injectors 2-1 to 2-n and a circuit (not shown) for energizing and driving the metering valve 6, and the like, as main components, centered on a microcomputer 21 having a heretofore and commonly known configuration.

As well as a detection signal of a pressure sensor 11 which detects a pressure of the common rail 1 being input into such an electronic control unit 4, various detection signals, such as an engine speed, an accelerator pedal position, an engine coolant temperature, and a fuel temperature, are input thereinto for use in the operation control and fuel injection control of the engine 3.

Fig. 2 shows a functional block diagram representing, in the form of functional blocks, functions performed by the microcomputer 21 in order for the microcomputer 21 to execute a correction amount control process in the fuel injection amount correction according to the embodiment of the invention, while Fig. 3 is a sub-routine flowchart showing a correction amount control processing procedure in the fuel injection amount correction according to the embodiment of the invention executed by the microcomputer 21, and hereafter, a description will be given, while referring to these diagrams, of the correction amount control processing procedure in the fuel injection amount correction according to the embodiment of the invention.

Firstly, a general description will be given, while referring to Fig. 8, of a heretofore known fuel injection amount correction which is a premise.

The correction amount control method for the fuel injection amount correction according to the embodiment of the invention is, in a so-called multi injection control wherein a plurality of fuel injections are carried out in one engine cycle, to eliminate the insufficiency of conformity of a correction amount in the fuel injection amount correction heretofore carried out, in particular, in a low temperature environment, and make a correction of the correction amount in order to achieve an increased conformity.

Firstly, Fig. 8 shows a fuel injection amount change characteristic example illustrating the heretofore known fuel injection amount correction in the multi injection control, a description will hereafter be given, while referring to the diagram, of the heretofore known fuel injection amount correction in the multi injection control.

In the diagram, the horizontal axis represents an elapsed time (an interval time Tdiff) between the finish of a preceding injection and the start of a succeeding injection, and the vertical axis represents a pulsating quantity of a fuel injection amount, that is, in other words, an amount of change from what the fuel injection amount should be.

In the diagram, the characteristic line (the characteristic line given a reference character and numeral A1) represented by the chain double-dashed line shows an example of the fuel injection amount pulsating quantity of the injectors 2-1 to 2-n, with respect to the elapsed time, after the preceding fuel injection has finished when there is not the fuel injection amount correction in the multi injection control (hereafter called the "multi fuel injection amount correction" for convenience sake).

Originally, an injection from the injectors 2-1 to 2-n should be zeroed after the preceding injection has finished, that is, after an application of a drive signal for an injection into the injectors 2-1 to 2-n has been cut off. That is, in Fig. 8, the fuel injection amount pulsating quantity should be zeroed regardless of an elapsing of the interval time (hereafter called the "interval" for convenience sake).

However, in actuality, a fuel injection amount pulsation occurs after the point at which the preceding injection has finished, as represented by the chain double-dashed characteristic line in Fig. 8. This is considered to be caused as a result of a pressure fluctuation occurring in the pipes of the injectors 2-1 to 2-n due to the preceding injection, and the effect thereof remains even after the injection has finished, destroying the balance between an open and closed condition of the injection holes of the injectors 2-1 to 2-n.

Therein, it is the fuel injection amount correction in the multi injection control that carries out a correction of the fuel injection amount in order to suppress such a fuel injection amount change.

That is, in Fig. 8, the characteristic line (the characteristic line given a reference character and numeral C1) represented by the broken line is a correction amount ΔQ change characteristic example of the fuel injection amount correction in the multi injection control. With such a fuel injection amount correction, a correction is made such as to counteract the previous uncorrected fuel injection amount change shown by the chain double-dashed line in Fig. 8. In Fig. 8, the vertical axis represents an amount of change in the correction amount ΔQ with respect to the heretofore described correction amount ΔQ change characteristic line.

Then, the characteristic line (the characteristic line given a reference character and numeral B1) represented by the solid line in Fig. 8 represents the fuel injection amount pulsating quantity after the heretofore described kind of fuel injection amount correction has been made.

Meanwhile, the kind of fuel injection amount fluctuation characteristic after a former injection has finished, shown by the chain double-dashed characteristic line in Fig. 8, changes depending on, for example, an environmental temperature, too.

For this reason, the heretofore described correction amount in the fuel injection amount correction is fixed by taking a change in the fuel injection amount change characteristic accompanying that kind of environmental temperature change into consideration to some degree. That is, for example, a measure is taken such as to assume a standard environmental temperature range, average a change in the fuel injection amount change characteristic within the range, fix a standard fuel injection amount change characteristic, and fix a preferred fuel injection amount correction amount therefor.

However, it is seen as a problem that the fuel injection amount correction amount is not necessarily appropriate, in particular, when the environmental temperature is in a low temperature region.

The fuel injection control according to the embodiment of the invention is arranged so that an appropriate correction is realized in the heretofore described kind of fuel injection amount correction control, in particular, even in the low temperature environment.

Herein, when executing the correction amount control process in the fuel injection amount correction by means of the microcomputer 21, which will be described hereafter, it is premised that, in the same way as heretofore known, an arrangement is such that the fuel injection control, rail pressure control, and the like, are carried out by the microcomputer 21 in accordance with the operating condition of the engine 3, that is, based on the engine speed and accelerator pedal position, and on an actual rail pressure, or the like.

Therefore, on the process being started by the microcomputer 21, firstly, a calculation of a former injection amount Q1, a latter injection amount Q2, an interval Tdiff, and a rail pressure P is carried out (refer to step S100 of Fig. 3).

Herein, the "former injection amount Q1" means a fuel injection amount, of injection amounts at two temporally sequential injection points in one engine cycle, in the preceding injection (former injection), and the "latter injection amount Q2" is a fuel injection amount in the succeeding injection (a latter injection). More specifically, the former injection amount is of a pilot injection, and the latter injection amount Q2 is of a main injection.

Also, the "interval Tdiff" is a time between the former injection and the latter injection, and the rail pressure P is a target rail pressure.

Each of these is arithmetically calculated using a predetermined arithmetic expression based on the operating information of the engine 3, that is, on the engine speed, accelerator pedal position, actual rail pressure, and the like, in the same way as heretofore known.

Next, a fuel injection correction amount phase-part calculation process is carried out by the microcomputer 21 (refer to step S200 of Fig. 3).

Herein, a "phase-part" of the fuel injection correction amount is for, with respect to the fuel injection amount change characteristic after the former injection has finished when there is no fuel injection correction, previously described while referring to Fig. 8 (refer to the characteristic line given the reference character and numeral A1 in Fig. 8), correcting a fluctuation of the fuel injection amount caused by the phase characteristic thereof changing due to a pressure fluctuation occurring in the injectors 2-1 to 2-n.

In the embodiment of the invention, the phase-part is calculated using a predetermined arithmetic expression for the phase-part based on the rail pressure P (target rail pressure) and the former injection amount Q1. Such a predetermined arithmetic expression for the phase-part is fixed based on a simulation, a test result, or the like.

In Fig. 2, such a process of step S200 executed by the microcomputer 21 is shown as a "phase-part calculation process" as one of processing functions realized in the microcomputer 21.

Next, a fuel injection correction amount cycle-part calculation is carried out by the microcomputer 21 (refer to step S300 of Fig. 3).

Herein, a "cycle-part" of the fuel injection correction amount is for correcting an effect on the cycle of the fuel injection amount change characteristic caused by a sound speed change in the pipes of the injectors 2-1 to 2-n due to the former injection changing (details will be described hereafter).

In Fig. 2, such a process of step S300 executed by the microcomputer 21 is shown as a "cycle-part calculation process" as one of the processing functions realized in the microcomputer 21.

Next, a base correction waveform calculation is carried out by the microcomputer 21 (refer to step S400 of Fig. 3).

In Fig. 2, such a process of step S400 executed by the microcomputer 21 is shown as a "base correction waveform calculation process" as one of the processing functions realized in the microcomputer 21.

Herein, a "base correction waveform" is a waveform representing a temporal correction amount change, which is a reference fixing a correction amount. More specifically, it is a waveform represented with the horizontal axis as the interval Tdiff, and the vertical axis as the correction amount ΔQ.

Such a base correction waveform is arithmetically calculated with a value obtained by multiplying the previous phase-part and cycle-part together, and the former injection amount Q1 as parameters (refer to Fig. 2). That is, in the base correction waveform calculation, differences in the correction amount ΔQ occurring due to the rail pressure P, temperature, and the like, are averaged for each former injection amount Q1. In the embodiment of the invention, a base correction waveform obtained in advance from a simulation, a test, or the like, in accordance with the former injection amount Q1 to be actually used, is stored in an appropriate storage region of the microcomputer 21 correlated to the value obtained by multiplying the phase-part and cycle-part together, and the base correction waveform is selected in accordance with the former injection amount Q1 to be actually used.

Next, an amplitude correction factor calculation is carried out by the microcomputer 21 (refer to step S500 of Fig. 3).

In Fig. 2, such a process of step S500 executed by the microcomputer 21 is shown as an "amplitude correction factor calculation process" as one of the processing functions realized in the microcomputer 21.

Herein, an "amplitude correction factor", being for correcting the amplitude of the base correction waveform obtained in the previous step S400, is calculated using a predetermined arithmetic expression for the amplitude correction factor based on the rail pressure P and the latter injection amount Q2. Such a predetermined arithmetic expression for the amplitude correction factor is fixed based on a simulation, a test result, or the like.

Next, a temperature correction factor calculation is carried out by the microcomputer 21 (refer to step S600 of Fig. 3).

In Fig. 2, such a process of step S600 executed by the microcomputer 21 is shown as a "temperature correction factor calculation process" as one of the processing functions realized in the microcomputer 21.

This "temperature correction factor" is calculated using a predetermined arithmetic expression for the temperature correction factor based on the rail pressure P and an estimated fuel temperature of fuel nearest to the injectors 2-1 to 2-n (hereafter called the "estimated injector proximity fuel temperature" for convenience sake). Such a predetermined arithmetic expression for the temperature correction factor is fixed based on a simulation, a test result, or the like.

Also, the estimated injector proximity fuel temperature is calculated using a predetermined arithmetic expression for the estimated temperature, based on an engine coolant temperature and a fuel temperature, in the microcomputer 21 (refer to Fig. 2). In Fig. 2, the "water temp." means the engine coolant temperature, and the "fuel temp." means the fuel temperature. Also, the predetermined arithmetic expression for the estimated temperature is fixed based on a simulation, a test result, or the like.

A "temperature correction factor" according to the embodiment of the invention, being for adjusting the amplitude of the correction amount ΔQ, is set in such a way that a correction sensitivity becomes low when the environmental temperature is an extremely low temperature, that is, in other words, when a fuel viscosity is high, while the correction sensitivity becomes higher as the environmental temperature comes closer to a normal environmental temperature. "The correction sensitivity is high" means that the value of the correction factor increases, and "the correction sensitivity is low" means that the value of the correction factor decreases.

Then, lastly, the final correction amount ΔQ of the fuel injection amount is calculated (refer to step S700 of Fig. 3).

That is, the correction amount ΔQ is obtained by multiplying the base correction waveform by the amplitude correction factor and temperature correction factor (refer to Fig. 2).

After this series of processes has finished, the process is once returned to an unshown main routine, and after another necessary process has been executed, the series of processes of Fig. 3 is carried out again.

Fig. 4 is a sub-routine flowchart showing a more specific procedure of the cycle-part calculation process of step S300 of Fig. 3, and the details thereof will hereafter be described while referring to the diagram.

On the process being started by the microcomputer 21, firstly, the engine coolant temperature is input into the appropriate storage region in the microcomputer 21, and temporarily stored (refer to step S302 of Fig. 4).

Next, in the same way, the fuel temperature is input into the appropriate storage region in the microcomputer 21, and temporarily stored (refer to step S304 of Fig. 4).

Then, the estimated injector proximity fuel temperature is calculated by the microcomputer 21, based on the engine coolant temperature and fuel temperature input in the way heretofore described, using a predetermined arithmetic expression for the estimated injector proximity fuel temperature (refer to step S306 of Fig. 4). Such a predetermined arithmetic expression for the estimated injector proximity fuel temperature is fixed based on a simulation, a test result, or the like.

Next, an inputting of the rail pressure P is carried out (refer to step S308 of Fig. 4).

It is sufficient that data acquired at the time of the previous process of step S100 are diverted to the inputting of the rail pressure P, and it is not necessary to carry out a ΔQ new inputting.

Next, a fuel sound speed ratio calculation is carried out using a predetermined arithmetic expression for the fuel sound speed based on the estimated injector proximity fuel temperature calculated in the previous step S306, and on the rail pressure P obtained in step S308 (refer to step S310 of Fig. 4), and the value thereof is output as a cycle-part (refer to step S312 of Fig. 4). The predetermined arithmetic expression for the fuel sound speed is fixed based on a simulation, a test result, or the like.

Fig. 7 shows a fuel injection amount change characteristic example illustrating the fuel injection amount correction of the embodiment of the invention, and a description will hereafter be given of the diagram.

In the diagram, the horizontal axis represents an elapsed time (an interval) between the finish of a preceding injection and the start of a succeeding injection, and the vertical axis represents a fuel injection amount pulsating quantity, that is, in other words, an amount of change from what the fuel injection amount should be.

In the diagram, the characteristic line (the characteristic line given a reference character A) represented by the chain double-dashed line shows an example of a pulsating quantity of fuel injected from the injectors 2-1 to 2-n, with respect to the time elapse, after an operation of the preceding fuel injection has been finished when there is no multi fuel injection amount correction.

In Fig. 7, the characteristic line (the characteristic line given a reference character C) represented by the broken line represents a correction amount ΔQ change characteristic obtained in the way heretofore described, and the characteristic line (the characteristic line given a reference character B) represented by the solid line represents a fuel injection amount pulsating quantity change characteristic when a multi fuel injection amount correction with the kind of characteristic shown by the broken line is made.

With the fuel injection amount change characteristic shown in Fig. 7 (refer to the characteristic line given the reference character B), it can be confirmed that the fluctuation is sufficiently suppressed in comparison with the heretofore known fuel injection amount change characteristic after the multi fuel injection amount correction previously shown in Fig. 8 (refer to the characteristic line given the reference character and numeral B1 in Fig. 8).

This is because, in the embodiment of the invention, it is arranged in such a way that, in a correction amount Δ Q calculation process, the temperature correction factor is used as a multiplication factor (refer to Fig. 2) unlike in the heretofore known case, and when the environmental temperature changes from a room temperature region to a low temperature region, the temperature correction factor decreases, thus preventing the correction amount ΔQ from becoming larger than necessary unlike in the heretofore known case.

Next, a description will be given of a second configuration example, while referring to Figs. 5 and 6.

Fig. 5 is a functional block diagram representing in the form of functional blocks a function which the microcomputer 21 performs in order to execute a correction amount control process in a fuel injection amount correction of the second configuration example, and Fig. 6 is a sub-routine flowchart showing a correction amount control processing procedure in the fuel injection amount correction of the second configuration example.

In Fig. 6, steps having the same processing details as the previous steps shown in Fig. 3 being given identical characters and numerals, a detailed description thereof will be omitted, and a description will hereafter be given centered on differing points.

The correction amount control process in the fuel injection amount correction of the second configuration example is such that pressure correction factor calculation (refer to step S530 of Fig. 6) and pressure offset calculation (refer to step S560 of Fig. 6) processes are added to the previous correction amount control processing procedure in the fuel injection amount correction of the first configuration example shown in Fig. 3.

That is, in the pressure correction factor calculation process, a pressure correction factor is arithmetically calculated using a predetermined arithmetic expression for the pressure correction factor based on the rail pressure P and the base correction waveform obtained in the process of step S400. Herein, the predetermined arithmetic expression for the pressure correction factor is fixed based on a simulation, a test result, or the like.

In Fig. 5, such a process of step S530 executed by the microcomputer 21 is shown as a "pressure correction factor calculation process" as one of the processing functions realized in the microcomputer 21.

Then, the value obtained by multiplying the base correction waveform, obtained in the process of step S400, by the amplitude correction factor is further multiplied by the pressure correction factor as a multiplication factor (refer to Fig. 5).

It is for the kind of reason described below that this kind of pressure correction factor is used.

That is, the basic waveform of a fuel injection amount fluctuation (refer to the characteristic line given the reference character A in Fig. 7), not depending on a change in rail pressure, is fixed by the injection amount in the former injection, but a phenomenon occurs in which the more an actual rail pressure is dissociated from a rail pressure which is made a conformity reference of the waveform, the more the balance between the top and bottom of the waveform itself changes, and no appropriate correction amount ΔQ is obtained.

The pressure correction factor is used to secure an appropriate correction amount ΔQ by changing the basic waveform of the fuel injection amount fluctuation (refer to the characteristic line given the reference character A in Fig. 7) flexibly in accordance with the change in rail pressure.

It is preferable that such a pressure correction factor is set in such a way that sensitivity becomes high in the vicinity of each of an upper limit and a lower limit of a used rail pressure range, that is, in other words, a factor value becomes large, and it is possible, as previously described, to suppress the fluctuation of the basic waveform of the injection amount fluctuation.

Next, a pressure offset calculation is carried out in step S560.

Herein, a "pressure offset" is an offset amount for making an offset correction in the vertical direction of the correction amount ΔQ. The offset in the vertical direction of the correction amount ΔQ means that the whole of the correction amount ΔQ characteristic example represented by the characteristic line given the reference character C in Fig. 7 is displaced in the direction of the vertical axis of Fig. 7 representing the amount of change in correction amount.

Such a pressure offset is one which corrects an offset of the correction amount ΔQ occurring by the used rail pressure becoming dissociated from an assumed range, and it is preferable that it is set in such a way that sensitivity becomes high in the vicinity of each of the upper limit and the lower limit of the used rail pressure range, that is, in other words, the offset amount becomes large.

In Fig. 5, such a process of step S560 executed by the microcomputer 21 is shown as a "pressure offset calculation process" as one of the processing functions realized in the microcomputer 21.

In the embodiment of the invention, the pressure offset is calculated using a predetermined arithmetic expression for the pressure offset based on the base correction waveform and rail pressure obtained in the process of step S400. Such a predetermined arithmetic expression for the pressure offset is fixed based on a simulation, a test result, or the like.

Then, by adding the calculated pressure offset to the previous result of multiplication of the pressure correction factor, it is possible to obtain a desired offset adjustment (refer to Fig. 5).

As the arrangement is such that it is possible to more appropriately change the correction amount in the low temperature region in order to suppress and ameliorate a deteriorating correction effect in the low temperature region of the fuel injection amount correction control in the common rail fuel injection control apparatus, the invention can be applied to a common rail fuel injection control apparatus intended to be used, in particular, in the low temperature environment.

## Claims

1. A correction amount control method for a fuel injection amount correction for, in a common rail fuel injection control apparatus configured capable of a multi injection, controlling a correction amount (ΔQ) in the fuel injection amount correction executed in order to reduce a fuel injection amount pulsation occurring between a preceding fuel injection and a fuel injection succeeding a finishing of the preceding fuel injection in one engine cycle, **characterized in**
**that** a temperature correction factor, which suppresses a deterioration in the fuel injection amount correction when an environmental temperature is in a low temperature region below a room temperature, is used in a correction amount calculation process in the fuel injection amount correction,
**that** the temperature correction factor, being one which is calculated using a predetermined arithmetic expression for the temperature correction factor, and used as a multiplication factor in the correction amount calculation process in the fuel injection amount correction for adjusting the amplitude of the correction amount (ΔQ), is set to a value which further reduces the correction amount (ΔQ) when the environmental temperature is in the low temperature region in comparison with when the environmental temperature is out of the low temperature region, that the predetermined arithmetic expression for the temperature correction factor is configured capable of calculating the temperature correction factor based on a target rail pressure and an estimated temperature of fuel nearest to injectors, and
**that** the estimated temperature of the fuel nearest to the injectors is calculated using a predetermined arithmetic expression for the estimated temperature, and the predetermined arithmetic expression for the estimated temperature is configured capable of calculating the estimated temperature of the fuel nearest to the injectors based on an engine coolant temperature and a fuel temperature.

2. The correction amount control method for the fuel injection amount correction according to claim 1,
**characterized in that**
a pressure correction factor which suppresses a deterioration in the fuel injection amount correction due to a change in actual rail pressure is used in the correction amount calculation process in the fuel injection amount correction.

3. The correction amount control method for the fuel injection amount correction according to claim 2,
**characterized in that**
the pressure correction factor, being calculated using a predetermined arithmetic expression for the pressure correction factor, is used as a multiplication factor in the correction amount calculation process in the fuel injection amount correction, and a value thereof is set so as to be able to compensate for a reduction in each of an upper limit and a lower limit of a used rail pressure range,
the predetermined arithmetic expression for the pressure correction factor is configured capable of calculating the pressure correction factor based on a base correction waveform and the target rail pressure, and
the base correction waveform is a waveform representing a temporal change in correction amount (ΔQ), which is a reference which fixes the correction amount (ΔQ) in the fuel injection amount correction, and a waveform preset in accordance with the size of former injection is selected.

4. A common rail fuel injection control apparatus which, as well as being configured capable of a multi injection into an internal combustion engine with injectors by means of a control by an electronic control unit in accordance with an operating condition of the internal combustion engine, is configured so that a fuel injection amount correction control which reduces a fuel injection amount pulsation occurring between a preceding fuel injection and a fuel injection succeeding a finishing of the preceding fuel injection in one engine cycle can be executed by the electronic control unit, **characterized in**
**that** the electronic control unit is configured in such a way that a temperature correction factor, which suppresses a deterioration in the fuel injection amount correction when an environmental temperature is in a low temperature region below a room temperature, is used in a correction amount calculation in the fuel injection amount correction,
**that** the temperature correction factor, being one which is calculated using a predetermined arithmetic expression for the temperature correction factor, and used as a multiplication factor in a correction amount calculation process in the fuel injection amount correction for adjusting the amplitude of the correction amount (ΔQ), is set to a value which further reduces the correction amount (ΔQ) when the environmental temperature is in the low temperature region in comparison with when the environmental temperature is out of the low temperature region, that the predetermined arithmetic expression for the temperature correction factor is configured capable of calculating the temperature correction factor based on a target rail pressure and an estimated temperature of fuel nearest to injectors, and
**that** the estimated temperature of the fuel nearest to the injectors, being calculated using a predetermined arithmetic expression for the estimated temperature, and the predetermined arithmetic expression for the estimated temperature is configured capable of calculating the estimated temperature of the fuel nearest to the injectors based on an engine coolant temperature and a fuel temperature.

5. The common rail fuel injection control apparatus according to claim 4, **characterized in that** the electronic control unit is configured in such a way that a pressure correction factor which suppresses a deterioration in the fuel injection amount correction due to an actual rail pressure is used in the correction amount calculation in the fuel injection amount correction.

6. The common rail fuel injection control apparatus according to claim 5, **characterized in that** the pressure correction factor, being calculated using a predetermined arithmetic expression for the pressure correction factor, is used as a multiplication factor in the correction amount calculation process in the fuel injection amount correction, and a value thereof is set so as to be able to compensate for a reduction in each of an upper limit and a lower limit of a used rail pressure range,
the predetermined arithmetic expression for the pressure correction factor is configured capable of calculating the pressure correction factor based on a base correction waveform and the target rail pressure, and
the base correction waveform is a waveform representing a temporal change in correction amount (ΔQ), which is a reference fixing the correction amount (ΔQ) in the fuel injection amount correction, and a waveform preset in accordance with the size of former injection is selected.

## Patentansprüche

1. Korrekturmengen-Steuerverfahren für eine Kraftstoffeinspritzmengenkorrektur, um in einer "Common Rail"- oder Sammelschienen-Kraftstoffeinspritzsteuervorrichtung, die für eine Mehrfacheinspritzung konfiguriert ist, eine Korrekturmenge (ΔQ) in der Kraftstoffeinspritzmengenkorrektur zu steuern, die ausgeführt wird, um eine Kraftstoffeinspritzmengen-Pulsation, die zwischen einer vorhergehenden Kraftstoffeinspritzung und einer Kraftstoffeinspritzung, die einem Ende der vorhergehenden Kraftstoffeinspritzung in einem Kraftmaschinenzyklus folgt, zu verringern, **dadurch gekennzeichnet,**
**dass** in einem Korrekturmengenberechnungsprozess in der Kraftstoffeinspritzmengenkorrektur ein Temperaturkorrekturfaktor verwendet wird, der eine Verschlechterung der Kraftstoffeinspritzmengenkorrektur unterdrückt, wenn eine Umgebungstemperatur in einem niedrigen Temperaturbereich unterhalb einer Raumtemperatur liegt,
**dass** der Temperaturkorrekturfaktor, der ein Faktor ist, der unter Verwendung eines vorgegebenen arithmetischen Ausdrucks für den Temperaturkorrekturfaktor berechnet wird und als ein Multiplikationsfaktor in dem Korrekturmengenberechnungsprozess in der Kraftstoffeinspritzmengenkorrektur verwendet wird, um die Amplitude der Korrekturmenge (ΔQ) einzustellen, im Vergleich zu dem Fall, in dem die Umgebungstemperatur außerhalb eines niedrigen Temperaturbereichs liegt, auf einen Wert eingestellt wird, der die Korrekturmenge (ΔQ) weiter verringert, wenn die Umgebungsbedingung in dem niedrigen Temperaturbereich liegt,
**dass** der vorgegebene arithmetische Ausdruck für den Temperaturkorrekturfaktor für die Berechnung des Temperaturkorrekturfaktors anhand eines Soll-Schienendrucks und einer geschätzten Temperatur des Kraftstoffs nahe bei den Einspritzeinrichtungen konfiguriert ist und
**dass** die geschätzte Temperatur des Kraftstoffs nahe bei den Einspritzeinrichtungen unter Verwendung eines vorgegebenen arithmetischen Ausdrucks für die geschätzte Temperatur berechnet wird und der vorgegebene arithmetische Ausdruck für die geschätzte Temperatur für die Berechnung der geschätzten Temperatur des Kraftstoffs nahe bei den Einspritzeinrichtungen anhand einer Kraftmaschinenkühlmitteltemperatur und einer Kraftstofftemperatur konfiguriert ist.

2. Korrekturmengen-Steuerverfahren für die Kraftstoffeinspritzmengenkorrektur nach Anspruch 1,
**dadurch gekennzeichnet, dass**
ein Druckkorrekturfaktor, der eine Verschlechterung der Kraftstoffeinspritzmengenkorrektur aufgrund einer Änderung des Ist-Schienendrucks unterdrückt, in dem Korrekturmengenberechnungsprozess in der Kraftstoffeinspritzmengenkorrektur verwendet wird.

3. Korrekturmengen-Steuerverfahren für die Kraftstoffeinspritzmengenkorrektur nach Anspruch 2,
**dadurch gekennzeichnet, dass**
der Druckkorrekturfaktor, der unter Verwendung eines vorgegebenen arithmetischen Ausdrucks für den Druckkorrekturfaktor berechnet wird, als ein Multiplikationsfaktor in dem Korrekturmengenberechnungsprozess in der Kraftstoffeinspritzmengenkorrektur verwendet wird und ein Wert hiervon eingestellt wird, damit es möglich ist, eine Verringerung sowohl einer oberen Grenze als auch einer unteren Grenze eines verwendeten Schienendruckbereichs auszugleichen,
wobei der vorgegebene arithmetische Ausdruck für den Druckkorrekturfaktor für die Berechnung des Druckkorrekturfaktors anhand einer Basiskorrektursignalform und des Soll-Schienendrucks konfiguriert ist und
die Basiskorrektursignalform eine Signalform ist, die eine zeitliche Änderung der Korrekturmenge (ΔQ) repräsentiert, die ein Bezugswert ist, der die Korrekturmenge (ΔQ) in der Kraftstoffeinspritzmengenkorrektur festlegt, wobei eine Signalform, die im Voraus in Übereinstimmung mit der Größe einer früheren Einspritzung eingestellt worden ist, gewählt wird.

4. Sammelschienen-Kraftstoffeinspritzsteuervorrichtung, die auch für eine Mehrfacheinspritzung in eine Brennkraftmaschine mit Einspritzeinrichtungen mittels einer Steuerung durch eine elektronische Steuereinheit in Übereinstimmung mit einer Betriebsbedingung der Brennkraftmaschine konfiguriert ist und in der Weise konfiguriert ist, dass eine Kraftstoffeinspritzmengenkorrektursteuerung, die eine Kraftstoffeinspritzmengen-Pulsation, die zwischen einer vorhergehenden Kraftstoffeinspritzung und einer Kraftstoffeinspritzung, die einem Ende der vorhergehenden Kraftstoffeinspritzung in einem Kraftmaschinenzyklus folgt, auftritt, verringert, durch die elektronische Steuereinheit ausgeführt werden kann, **dadurch gekennzeichnet,**
**dass** die elektronische Steuereinheit in der Weise konfiguriert ist, dass in einer Korrekturbetragberechnung in der Kraftstoffeinspritzmengenkorrektur ein Temperaturkorrekturfaktor, der eine Verschlechterung der Kraftstoffeinspritzmengenkorrektur unterdrückt, wenn eine Umgebungstemperatur in einem niedrigen Temperaturbereich unterhalb einer Raumtemperatur liegt, verwendet wird,
**dass** der Temperaturkorrekturfaktor, der unter Verwendung eines vorgegebenen arithmetischen Ausdrucks für den Temperaturkorrekturfaktor berechnet wird und als ein Multiplikationsfaktor in einem Korrekturmengenberechnungsprozess in der Kraftstoffeinspritzmengenkorrektur verwendet wird, um die Amplitude der Korrekturmenge (ΔQ) einzustellen, im Vergleich zu dem Fall, in dem die Umgebungstemperatur außerhalb eines niedrigen Temperaturbereichs liegt, auf einen Wert eingestellt wird, der die Korrekturmenge (ΔQ) weiter verringert, wenn die Umgebungstemperatur in dem niedrigen Temperaturbereich liegt,
**dass** der vorgegebene arithmetische Ausdruck für den Temperaturkorrekturfaktor für die Berechnung des Temperaturkorrekturfaktors anhand eines Soll-Schienendrucks und einer geschätzten Temperatur des Kraftstoffs nahe bei den Einspritzeinrichtungen konfiguriert ist und
**dass** die geschätzte Temperatur des Kraftstoffs nahe bei den Einspritzeinrichtungen unter Verwendung eines vorgegebenen arithmetischen Ausdrucks für die geschätzte Temperatur berechnet wird und der vorgegebene arithmetische Ausdruck für die geschätzte Temperatur für die Berechnung der geschätzten Temperatur des Kraftstoffs nahe bei den Einspritzeinrichtungen anhand einer Kraftmaschinenkühlmitteltemperatur und einer Kraftstofftemperatur konfiguriert ist.

5. Sammelschienen-Kraftstoffeinspritzsteuervorrichtung nach Anspruch 4, **dadurch gekennzeichnet, dass** die elektronische Steuereinheit in der Weise konfiguriert ist, dass ein Druckkorrekturfaktor, der eine Verschlechterung der Kraftstoffeinspritzmengenkorrektur aufgrund eines Ist-Schienendrucks unterdrückt, in der Korrekturmengenberechnung in der Kraftstoffeinspritzmengenkorrektur verwendet wird.

6. Sammelschienen-Kraftstoffeinspritzsteuervorrichtung nach Anspruch 5, **dadurch gekennzeichnet, dass** der Druckkorrekturfaktor, der unter Verwendung eines vorgegebenen arithmetischen Ausdrucks für den Druckkorrekturfaktor berechnet wird, als ein Multiplikationsfaktor in dem Korrekturmengenberechnungsprozess in der Kraftstoffeinspritzmengenkorrektur verwendet wird und ein Wert hiervon in der Weise eingestellt wird, dass eine Verringerung sowohl einer oberen Grenze als auch einer unteren Grenze eines verwendeten Schienendruckbereichs ausgeglichen werden kann,
der vorgegebene arithmetische Ausdruck für den Druckkorrekturfaktor für die Berechnung des Druckkorrekturfaktors anhand einer Basiskorrektursignalform und des Soll-Schienendrucks konfiguriert ist und
die Basiskorrektursignalform eine Signalform ist, die eine zeitliche Änderung der Korrekturmenge (ΔQ) repräsentiert, die ein Bezugswert ist, der die Korrekturmenge (ΔQ) in der Kraftstoffeinspritzmengenkorrektur festlegt, und eine Signalform, die in Übereinstimmung mit der Größe einer früheren Einspritzung im Voraus eingestellt worden ist, gewählt wird.

## Revendications

1. Procédé de commande du degré de correction destiné à corriger la quantité de carburant injectée pour un appareil de commande d'injection de carburant à rampe commune susceptible d'effectuer des injections multiples, cette commande du degré de correction (ΔQ) de la correction de la quantité de carburant injectée étant effectuée pour réduire les pulsations de la quantité de carburant injectée se produisant entre l'injection de carburant précédente et l'injection de carburant succédant à l'achèvement de l'injection de carburant précédente dans un cycle du moteur,
**caractérisé en ce qu'**
un facteur de correction de température qui supprime l'altération de la correction de la quantité de carburant injectée lorsque la température du milieu se situe dans une plage de basses températures situées au-dessous de la température ambiante est utilisée dans un procédé de calcul du degré de correction de la correction de la quantité de carburant injectée,
le facteur de correction de température qui est calculé en utilisant une expression arithmétique prédéfinie de ce facteur de correction de température et utilisé entant que facteur multiplicatif dans le procédé de calcul du degré de correction de la correction de la quantité de carburant injectée pour régler l'amplitude du degré de correction (ΔQ) est ajusté à une valeur qui réduit encore le degré de correction (ΔQ) lorsque la température du milieu est située dans la plage de faibles températures par rapport à une situation dans laquelle la température du milieu est en dehors de la plage de basses températures,
l'expression arithmétique prédéfinie du facteur de correction de température permet de calculer le facteur de correction de température à partir d'une pression de rampe cible et de la température estimée du carburant au plus près des injecteurs, et
la température estimée du carburant au plus près des injecteurs est calculée en utilisant une expression arithmétique prédéfinie de la température estimée, et l'expression arithmétique prédéfinie de la température estimée permet de calculer la température estimée du carburant au plus près des injecteurs à partir de la température du liquide de refroidissement du moteur et de la température du carburant.

2. Procédé de commande du degré de correction destiné à corriger la quantité de carburant injectée conforme à la revendication 1,
**caractérisé en ce qu'**
un facteur de correction de pression qui supprime l'altération de la correction de la quantité de carburant injectée du fait d'une variation de la pression de rail actuelle est utilisé dans le procédé de calcul du degré de correction de la correction de la quantité de carburant injectée.

3. Procédé de commande du degré de correction destiné à corriger la quantité de fluide injecté conforme à la revendication 2,
**caractérisé en ce que**
le facteur de correction de pression qui est calculé en utilisant une expression arithmétique prédéfinie de ce facteur de correction de pression est utilisé en tant que facteur multiplicatif dans le procédé de calcul du degré de correction de la correction de la quantité de carburant injectée et une valeur de celui-ci est ajustée pour compenser une réduction de la limite supérieure et de la limite inférieure de la plage de pressions de rampe utilisée,
l'expression arithmétique prédéfinie du facteur de correction de pression permet de calculer le facteur de correction de pression à partir d'une forme d'onde de la correction de base et de la pression de rampe cible, et
la forme d'onde de la correction de base est une forme d'onde représentant une modification temporaire du degré de correction (ΔQ) qui est une référence qui fixe le degré de correction (ΔQ) de la correction de la quantité de carburant injectée et une forme d'onde préajustée selon l'importance de l'injection précédente est sélectionnée.

4. Appareil de commande de l'injection de carburant dans une rampe commune susceptible d'effectuer des injections multiples dans un moteur à combustion interne équipé d'injecteurs par commande par une unité de commande électronique selon la condition de fonctionnement du moteur à combustion interne dans lequel une commande de la correction de la quantité de carburant injectée qui réduit les pulsations de la quantité de carburant injectée se produisant entre l'injection de carburant précédente et l'injection de carburant succédant à l'achèvement de l'injection de carburant précédente dans un cycle du moteur peut être exécutée par l'unité de commande électronique,
**caractérisé en ce que**
l'unité de commande électronique est conformée de sorte qu'un facteur de correction de température qui supprime l'altération de la correction de la quantité de carburant injectée lorsque la température du milieux situé dans une plage de basses températures située au-dessous de la température ambiante soit utilisé pour le calcul du degré de correction de la correction de la quantité de carburant injectée,
le facteur de correction de température qui est calculé en utilisant une expression arithmétique prédéfinie de ce facteur de correction de température et utilisé entant que facteur multiplicatif dans le procédé de calcul du degré de correction de la correction de la quantité de carburant injectée pour régler l'amplitude du degré de correction (ΔQ) est ajusté à une valeur qui réduit encore le degré de correction (ΔQ) lorsque la température du milieu est située dans la plage de faibles températures par rapport à une situation dans laquelle la température du milieu est en dehors de la plage de basses températures,
**en ce que**
l'expression arithmétique prédéfinie du facteur de correction de température permet de calculer le facteur de correction de température à partir d'une pression de rampe cible et de la température estimée du carburant au plus près des injecteurs, et
la température estimée du carburant au plus près des injecteurs est calculée en utilisant une expression arithmétique prédéfinie de la température estimé et l'expression arithmétique prédéfinie de la température estimée permet de calculer la température estimée du carburant au plus près des injecteurs à partir de la température du liquide de refroidissement du moteur et de la température du carburant.

5. Appareil de commande de l'injection de carburant dans une rampe commune conforme à la revendication 4,
**caractérisé en ce que**
l'unité de commande électronique est conçue de sorte qu'un facteur de correction de pression qui supprime l'altération de la correction de la quantité de carburant injectée due à la pression de rampe actuelle soit utilisé lors du calcul du degré de correction de la correction de la quantité de carburant injectée.

6. Appareil de commande de l'injection de carburant dans une rampe commune conforme à la revendication 5,
**caractérisé en ce que**
le facteur de correction de pression qui est calculé en utilisant une expression arithmétique prédéfinie de ce facteur de correction de pression est utilisé entant que facteur multiplicatif dans le procédé de calcul du degré de correction de la correction de la quantité de carburant injectée, et une valeur de celui-ci est ajustée de sorte qu'elle puisse compenser une réduction de la limite supérieure et de la limite inférieure de la plage de pressions de rampe utilisée,
l'expression arithmétique prédéfinie du facteur de correction permet de calculer le facteur de correction de pression à partir d'une forme d'onde de la correction de base et de la pression de rampe cible, et
la forme d'onde de la correction de base est une forme d'onde représentant une modification temporaire du degré de correction (ΔQ) qui est une référence qui fixe le degré de correction (ΔQ) de la correction de la quantité de carburant injectée, et une forme d'onde préajustée selon l'importance de l'injection précédente est sélectionnée.
